# EUROPÄISCHE PATENTSCHRIFT

(11) **EP 0 789 651 B1**
(45) Veröffentlichungstag und Bekanntmachung des Hinweises auf die Patenterteilung: **04.10.2001**
(21) Anmeldenummer: 95937822.5
(22) Anmeldetag: 23.10.1995
(51) Int. Cl.: B32B 27/40, B32B 5/18, E04B 1/80, B29C 67/20, B29C 51/16

(54) **WÄRMEISOLIERENDER KÖRPER**
HEAT-INSULATING BODY
CORPS THERMO-ISOLANT

(30) Priorität: 04.11.1994 DE 4439328
(43) Veröffentlichungstag der Anmeldung: 20.08.1997
(73) Patentinhaber: BAYER AG, 51368 Leverkusen (DE)
(72) Erfinder: DIETRICH, Karl, Werner, D-51519 Odenthal (DE); THOMAS, Heinz, D-42799 Leichlingen (DE); SACHS, Hanns-Immo, D-51379 Leverkusen (DE)
(86) Internationale Anmeldenummer: EP9504147
(87) Internationale Veröffentlichungsnummer: WO9614207

(56) Entgegenhaltungen:
- EP-A- 0 188 806
- EP-A- 0 619 230
- WO-A-82/03821
- WO-A-93/19917
- DE-A- 1 911 645
- DE-A- 3 148 164
- US-A- 4 726 974
- US-A- 5 273 801
- DATABASE WPI Week 8214 Derwent Publications Ltd., London, GB; AN 82-27228E & JP,A,57 034 962 (MTP CHEMICAL KK)

## Beschreibung

Es ist bekannt, wärmeisolierende Körper (Vakuumpaneele) aus einem porösen Material und einer allseitig umhüllenden gasdichten Folie herzustellen, wobei der durch das poröse Material gebildete "Hohlraum" evakuiert wird. Das poröse Material kann entweder aus einem porigen Schüttgut oder aber aus einem harten Schaumstoff bestehen. Die Folie besteht üblicherweise aus Kombinationen von mehreren Schichten, wobei durch die verschiedenen Schichten unterschiedliche Aufgaben, wie Diffusionssperre gegenüber verschiedenen Gasen und mechanische Verfestigung, gelöst werden.

Die meisten marktgängigen Vakuumpaneele haben einen Kern aus poröser Schüttung, üblicherweise auf Silikat-Basis.

Die EP-A-619 230 beschreibt ganz allgemein ein Herstellverfahren für Vakuumpaneele, wobei Polyurethan-Hartschaumstoffe als Füllsubstrat nicht erwähnt werden. Die WO 93/19917 beschreibt ein Recycling-Verfahren für Polyurethan-Hartschaumstoff, bei dem Polyurethan-Flocken mit einer Größe von 2 - 4 mm mit Isocyanaten als Bindemittel wieder zu Platten verpreßt werden. Vakuumisolierpaneele werden in dieser Schrift nicht erwähnt. Die WO 82/03821 offenbart wärmeisolierende Verbundkörper aus Gas- undurchlässigen Beuteln, gefüllt mit Polyurethan-Kunststoffschaum in Partikelform, welche evakuiert und dann versiegelt werden. Hierbei wird kein Bindemittel offenbart noch werden die Beutel verformt. Die US-A-4 726 974 offenbart wärmeisolierende Schichtstoffe aus Gas- undurchlässigen versiegelten Folienbeuteln, gefüllt mit komprimierten Glasfasern eines Durchmessers kleiner als 5 - 10 um, welche bis zum Erreichen eines Hochvakuums evakuiert und dann versiegelt werden. Nach dieser Schrift wird jedoch kein Kunststoffschaum verwendet. Die JP-A-57 034 926 beschreibt Preßplatten aus mit Isocyanaten als Bindemittel gebundenen Polyurethan-Hartschaum-Flocken mit einer Größe von bis zu 20 mm.

In der EP-B 188 806 werden harte Schaumstoffe auf Polyurethan-(PUR)-Basis als Füllmaterial für Vakuumpaneele beschrieben. Das Problem bei diesem Verfahren ist, durch genaue Rezepturwahl und durch Einhalten bestimmter Verfahrensparameter die erforderliche Offenzelligkeit zu erreichen, da PUR-Hartschaumstoffe vorwiegend geschlossenzellig sind. Ein weiteres Problem bei der Verwendung von PUR-Hartschaumstoffen als Trägermaterial für Vakuumpaneele stellt das Ausgasen flüchtiger Bestandteile, wie Amine, Treibmittel, eventuell auch Monomere, dar.

Ein Vorteil von harten PUR-Schaumstoffen gegenüber porösen Schüttungen ist andererseits ihre genaue Dimensionierung als fertiges Vakuumpaneel, sowie ihre genaue Maßhaltigkeit.

Überraschenderweise wurde nun gefunden, daß man ein ausgezeichnetes Trägermaterial für Vakuumpaneele auf wirtschaftliche Weise herstellen kann, indem man Kunststoffschaumstoff-Pulver oder -Flocken, wie sie z.B. beim Recyclieren von Altschaumstoffen, vorzugsweise aus der Kühlschrankdämmung, anfallen, mit Bindemitteln mischt und unter Verwendung von Druck und gegebenenfalls Temperatur zu Formteilen der Rohdichte 50 bis 300 kg/m³, vorzugsweise 100 bis 250 kg/m³, verarbeitet. Hierbei werden Formteile, z.B. Platten mit feiner Porenstruktur und hoher Festigkeit sowie Maßhaltigkeit erhalten.

Gegenstand der Erfindung ist somit ein wärmeisolierender Körper, bestehend aus
a) einem porösen Preßformteil der Rohdichte 50 bis 350 kg/m³, vorzugsweise 100 bis 250 kg/m³, das durch Zerkleinern von hartem Kunststoffschaumstoff zu Pulver oder Flocken, und Binden des Pulvers oder der Flocken mit einem Bindemittel unter gleichzeitiger oder anschließender Verpressung unter Formgebung erhalten worden ist, und
b) einer das Preßformteil umhüllenden Folie, wobei die das Preßformteil umhüllende Folie evakuiert und dann hermetisch versiegelt worden ist.

Erfindungsgemäß bevorzugt ist, daß
- der zu zerkleinernde Kunststoff-Schaumstoff ein Polyurethanhartschaumstoff ist,
- der zu zerkleinernde Schaumstoff ein Recycling-Material, vorzugsweise ein Polyurethan-Hartschaumstoff, aus dem Recycling-Prozeß alter Kühlgeräte ist,
- das Schaumstoffpulver bzw. die Schaumstofflocken eine Teilchengröße von 0,01 bis 5 mm, vorzugsweise 0,1 bis 2 mm haben,
- das zur Herstellung des Preßformteils verwendete Bindemittel ein Di- oder Polyisocyanat ist, (vorzugsweise Gemische von Diphenylmethandiisocyanaten und Polyphenyl-polymethylen-polyisocyanaten)
- das Schaumstoff-Pulver bzw. die Schaumstofflocken oder das Preßformteil vor der Weiterverarbeitung durch Tempern bei Temperaturen von 50 bis 250°C, vorzugsweise 100 bis 150°C, gegebenenfalls bei niedrigem Druck, von flüchtigen Bestandteilen befreit worden ist,
- als umhüllende Folie eine mehrschichtige Folie, vorzugsweise eine Polyethylen/Aluminiumfolie oder Polyethylen/Polyvinylalkoholfolie, verwendet wird. Gegebenenfalls kann auch eine Deckschicht eine gasdichte, starre Platte sein.

Für das erfindungsgemäß hergestellte Vakuumpaneel kommen alle bekannten Folien, z.B. Kombinationsfolien, wie sie auch bei der Herstellung von handelsüblichen Vakuumpaneelen verwendet werden, in Betracht. Beispielhaft seien genannt: Kombination von Polyethylenfolie mit Polyvinylalkoholfolie oder Polyethylenfolie mit Aluminiumfolie.

Als erfindungsgemäß zu verwendende Schaumstoffe kommen alle harten Kunststoffschaumstoffe, vorzugsweise Polyurethan-Schaumstoffe, in Betracht. Obgleich die für Vakuumpaneele verwendeten Folien bereits eine hohe Gasdichte besitzen, sind sie dennoch keine Gas-/Dampfsperre. Insbesondere eindringender Wasserdampf kann das Vakuum und damit die Wärmedämmeigenschaften des Vakuumpaneels negativ beeinflussen. Um dies zu vermeiden, können erfindungsgemäß dampfabsorbierende Substanzen, wie z.B. solche auf Silikat- oder Aluminium-Basis, in Mengen von 5 bis 50, vorzugsweise 10 bis 25 Gew.-% verwendet werden. Es wurde jedoch gefunden, daß auch eine erfindungsgemäße PU-Verbundplatte bereits eine sehr stark wasserabsorbierende Fähigkeit besitzt.

Als Bindemittel kommen z.B. die in der DE-AS 1 911 645 genannten Di- und/oder Polyisocyanate in Frage.

Das Zerkleinern des Hartschaumstoffes kann z.B. durch Mahlen, Schleifen oder Zerrupfen erfolgen. Gegebenenfalls können auch größere Schaumstoffstücke zerdrückt/zerstampft werden.

Ein weiterer Vorteil der erfindungsgemäßen Vakuumpaneele besteht darin, daß das Preßformteil vorkonfektioniert werden kann oder daß gegebenenfalls neben Vakuumpaneelen auch Vakuumformkörper hergestellt werden können.

Die Schaumstoffplatten können z.B. vor dem Umhüllen mit Folie und Evakuieren auf Gerung geschnitten werden, oder für die Montage von Schaltern, Leitungen oder Kanälen können entsprechende Vertiefungen herausgefräst werden.

Die Feinheit der Porösität kann erfindungsgemäß eingestellt werden, einerseits durch die Intensität des Mahlvorganges, andererseits durch die Feinheit der Zellstruktur des zu zermahlenden Schaumstoffes.

Das Verpressen unter Formgebung erfolgt in an sich bekannter Weise bei erhöhtem Druck (z.B. 1,5-20 bar) und gegebenenfalls bei erhöhter Temperatur (z.B. 50-250°C). In einer Variante des erfindungsgemäßen Verfahrens kann nach dem Evakuieren das Substrat wieder ganz oder teilweise mit einem Gas befüllt werden, das eine niedrige Gaswärmeleitfähigkeit besitzt (z.B. Xenon).

### Ausführungsbeispiel

580 g eines PUR-Hartschaummehles aus einer Kühlgeräterecyclinganlage werden mit 20 g Wasser und 58 g eines Polyisocyanatgemisches von Diphenylmethandiisocyanaten und Polyphenylpolymethylen-polyisocyanaten (Desmodur® VP PU 1520 A20; Bayer AG) mit einem Lödige-Pflugschar-Mischer mit 2-Stoffdüsen gleichmäßig vermischt. Aus dieser Mischung wird in einem Form-Rahmen ein Formling von 400 x 400 mm gebildet, gleichmäßig verdichtet und anschließend in einer Laborpresse unter einem Druck von 5 bar und einer Temperatur von 120°C 8 Minuten unter Verwendung eines Zeit-Meßprogrammes auf 20 mm verpreßt.

Man erhält hieraus eine poröse 20 mm-Platte mit einer Rohdichte von 200 kg/m³. Die Platte wird ca. 2 h auf 120°C erwärmt, um sie von allen flüchtigen Bestandteilen zu befreien.

Die Platte wird mit einer Folie bestehend aus den Schichten
Polyethylen/Polyvinylalkohol/Polyethylen
umhüllt und auf 0,001 bar evakuiert. Unter Vakuum werden die Kanten der Folie verschweißt. Das so erhaltene Vakuum-Paneel hat, nach der Wärmeflußmethode gemessen, eine Wärmeleitzahl λ von 9 m W/°Km.

## Patentansprüche

1. Wärmeisolierender Körper, bestehend aus
a) einem porösen Preßformteil der Rohdichte 50 bis 350 kg/m³, vorzugsweise 100 bis 250 kg/m³, das durch Zerkleinern von hartem Polyurethanschaumstoff zu Pulver mit einer Teilchengröße von 0,1 bis 2mm und Binden des Pulvers mit einem Bindemittel unter gleichzeitiger oder anschließender Verpressung unter Formgebung erhalten worden ist, und
b) einer das Preßformteil umhüllenden Folie,
wobei die das Preßformteil umhüllende Folie evakuiert und dann hermetisch versiegelt worden ist.

2. Wärmeisolierender Körper gemäß Anspruch 1, **dadurch gekennzeichnet, daß** der zu zerkleinernde Schaumstoff ein Recycling-Material, ist, der aus dem Recycling-Prozeß alter Kühlgeräte stammt.

3. Wärmeisolierender Körper gemäß Anspruch 1 bis 2, **dadurch gekennzeichnet, daß** als Bindemittel für das Preßformteil ein Di- oder Polyisocyanat verwendet wird.

4. Wärmeisolierender Körper gemäß Anspruch 1 bis 3, **dadurch gekennzeichnet, daß** das Preßformteil durch Tempern bei Temperaturen von 50 bis 250°C, vorzugsweise 120 bis 200°C, gegebenenfalls bei niedrigem Druck, von flüchtigen Bestandteilen befreit worden ist.

5. Wärmeisolierender Körper gemäß Anspruch 1 bis 4, **dadurch gekennzeichnet, daß** als umhüllende Folie eine mehrschichtige Folie, vorzugsweise eine Polyethylen/Aluminiumfolie oder Polyethylen/Polyvinylalkoholfolie, verwendet wird.

## Claims

1. Heat-insulating body, comprising:
a) a porous pressed moulding having a bulk density of 50 to 350 kg/m³, preferably of 100 to 250 kg/m³, which has been obtained by comminution of rigid polyurethane foam to powder having a particle size of 0.1 to 2 mm and binding of the powder using a binder, with simultaneous or subsequent pressing with shaping, and
b) a film covering the pressed moulding,
the film which covers the pressed moulding having been evacuated and then hermetically sealed.

2. Heat-insulating body according to claim 1, **characterised in that** the foamed plastic to be comminuted is a recycling material which originates from the process of recycling old refrigerators.

3. Heat-insulating body according to claims 1 and 2, **characterised in that** the binder used for the pressed moulding is a diisocyanate or polyisocyanate.

4. Heat-insulating body according to claims 1 to 3, **characterised in that** the pressed moulding has been freed from volatile constituents by tempering at temperatures of 50 to 250°C, preferably of 120 to 200°C, optionally at low pressure.

5. Heat-insulating body according to claims 1 to 4, **characterised in that** the covering film used is a multilayer film, preferably a polyethylene/aluminium film or polyethylene/polyvinyl alcohol film.

## Revendications

1. Corps thermo-isolants constitués par
a) un élément poreux moulé par compression possédant une masse volumique apparente de 50 à 350 kg/m³, qui a été obtenu par fragmentation d'une mousse dure de polyuréthanne pour obtenir de la poudre possédant une granulométrie de 0,1 à 2 mm et par liaison de la poudre avec un liant, avec compression simultanée ou ultérieure donnant lieu à un façonnement, et
b) une feuille enveloppant l'élément moulé par compression,
dans lesquels la feuille enveloppant l'élément moulé par compression a été soumise à un traitement par lequel on fait le vide, puis à un thermosoudage pour la rendre étanche.

2. Corps thermo-isolants selon la revendication 1, **caractérisés en ce que** la mousse qui doit subir une fragmentation est une matière de recyclage qui provient du processus de recyclage de vieux réfrigérateurs.

3. Corps thermo-isolants selon les revendications 1 à 2, **caractérisés en ce qu'**on utilise, à titre de liant pour l'élément moulé par compression, un diisocyanate ou un polyisocyanate.

4. Corps thermo-isolants selon les revendications 1 à 3, **caractérisés en ce que** l'élément moulé par compression a été libéré des constituants volatils en le soumettant à un traitement thermique à des températures de 50 à 250°C, de préférence de 120 à 200°C, le cas échéant sous basse pression.

5. Corps thermo-isolants selon les revendications 1 à 4, **caractérisés en ce qu'**on utilise, à titre de feuilles d'enveloppement, une feuille multicouche, de préférence une feuille de polyéthylène/aluminium ou une feuille de polyéthylène/alcool polyvinylique.
